# EUROPEAN PATENT SPECIFICATION

(11) **EP 0 311 037 B1**
(45) Date of publication and mention of the grant of the patent: **10.02.1993**
(21) Application number: 88116457.8
(22) Date of filing: 05.10.1988
(51) Int. Cl.: G21C 3/32

(54) **Debris-resistant bottom nozzle for a nuclear fuel assembly**
Gegen Teilchen widerstandsfähiges Fussstück eines Kernbrennelements
Embout inférieur résistant aux débris pour assemblage de combustible nucléaire

(30) Priority: 05.10.1987 US 104748
(43) Date of publication of application: 12.04.1989
(73) Proprietor: WESTINGHOUSE ELECTRIC CORPORATION, Pittsburgh Pennsylvania 15222 (US)
(72) Inventor: Demario, Edmund Emory, Columbia, SC 29205 (US)
(74) Representative: Gallo, Wolfgang, Dipl.-Ing. (FH)

(56) References cited:
- EP-A- 0 184 219
- DE-A- 2 517 479
- FR-A- 2 500 947
- US-A- 4 684 496

## Description

The present invention relates generally to nuclear reactors and, more particularly, to a debris-resistant bottom nozzle in a nuclear fuel assembly.

During manufacture and subsequent installation and repair of components comprising a nuclear reactor coolant circulation system, diligent effort is made to assure removal of all debris from the reactor vessel and its associated systems which circulate coolant therethrough under various operating conditions. Although elaborate procedures are carried out to help assure debris removal, experience shows that in spite of the safeguards used to effect such removal, some chips and metal particles still may remain hidden in the systems. Most of the debris consists of metal turnings probably left in the primary system after steam generator repair or replacement.

Upon start-up of the reactor plant, such debris may be carried into a fuel assembly by the cooling entering it through flow holes in the lower core support plate and in the fuel assembly's bottom nozzle. If this debris then becomes lodged in the lowermost support grid of the fuel assembly between the cell walls of the grid and the lower end portions of the fuel rods extending therethrough, it may cause fretting damage to, and may even fret through, the cladding tubes of the fuel rods. Debris may also become entangled in the flow holes of the nozzle plate and there, under the action of flowing coolant, gyrate in a manner which, too, may result in perforation of fuel-rod cladding.

Several different approaches have been proposed and tried for carrying out removal of debris from nuclear reactors, such as described in U.S. Patent 4,096,032, and in EP Publications No. 0184219, No. 0196611, and No. 0213813, for example.

### SUMMARY OF THE INVENTION

The present invention provides a debris-resistant bottom nozzle in or for a nuclear fuel assembly including fuel-rod support grids, said bottom nozzle comprising support means for supporting the bottom nozzle on a lower core plate of a nuclear reactor which core plate has coolant inlet holes formed therein, and a plate connected to the support means and extending across said core plate thereabove when the bottom nozzle is supported on the core plate, characterized in that said plate is of substantially solid configuration with mutually spaced cut-out regions formed therein at locations which are in direct alignment with respective ones of said coolant inlet holes when the bottom nozzle is supported on the core plate, and each of said cut-out regions has associated therewith a separate open criss-cross structure which extends across the associated cut-out region and is affixed to said plate, each criss-cross structure defining a plurality of individual openings each of which is sufficiently small in cross-section to filter out coolant-borne debris too large to pass freely through unoccupied spaces of a lowermost one of said support grids supporting the fuel rods, and is sufficiently large in cross-section to pass debris of nondamage-inducing size and able to pass freely also through said unoccupied spaces of the lowermost support grid.

Preferably, the criss-cross structures have structural portions for supporting the lower ends of guide thimbles aligned with the respective cut-out regions of the bottom nozzle plate, and each cut-out region has substantially the same size as the respective inlet hole in the lower core plate associated therewith. The criss-cross structures may be either in the form of interleaved straps forming open grids or in the form of interconnected crossed wires forming open mesh structures. Optionally, at least one pressure-drop reducing flow hole may be formed in the bottom-nozzle plate at a location spaced from the cut-out regions.

A preferred embodiment of the invention will now be described, by way of example only, with reference to the accompanying drawings, in which:
Figure 1 is an elevational view, partly in section, of a fuel assembly including a debris-resistant bottom nozzle according to the invention, the fuel assembly being illustrated in vertically fore-shortened form and with parts broken away for clarity;
Figure 2 is a top plan view of a conventional bottom nozzle;
Figure 3 is an enlarged top plan view of a debris-resistant bottom nozzle embodying the invention;
Figure 4 is an enlarged top plan view of the upper left-hand corner of the debris-resistant bottom nozzle of Fig. 3;
Figure 5 is an enlarged top plan view of a fragmentary portion of one of several grid-type criss-cross structures of the debris-resistant bottom nozzle of Fig. 3;
Figure 5A is an enlarged top plan view of a fragmentary portion of an alternative criss-cross structure in the form of a wire mesh or screen structure;
Figure 6 is a cross-sectional view taken along line 6--6 of Fig. 5;
Figure 7 is a similar cross-sectional view taken along line 7--7 of Fig. 5;
Figures 8 to 11 are enlarged cross-sectional views taken along line 8--8, line 9--9, line 10--10, and line 11--11 of Fig. 4;
Figure 12 is a view similar to Fig. 4 but showing several additional pressure drop-reducing flow holes formed through the bottom nozzle plate; and
Figure 13 is an enlarged cross-sectional view taken along line 13--13 of Fig. 12.

In the following description, like reference characters designate like or corresponding parts throughout the several views of the drawings, and terms such as "forward", "rearward", "left", "right", "upwardly", "downwardly", and the like are employed as words of convenience not to be construed as limiting terms.

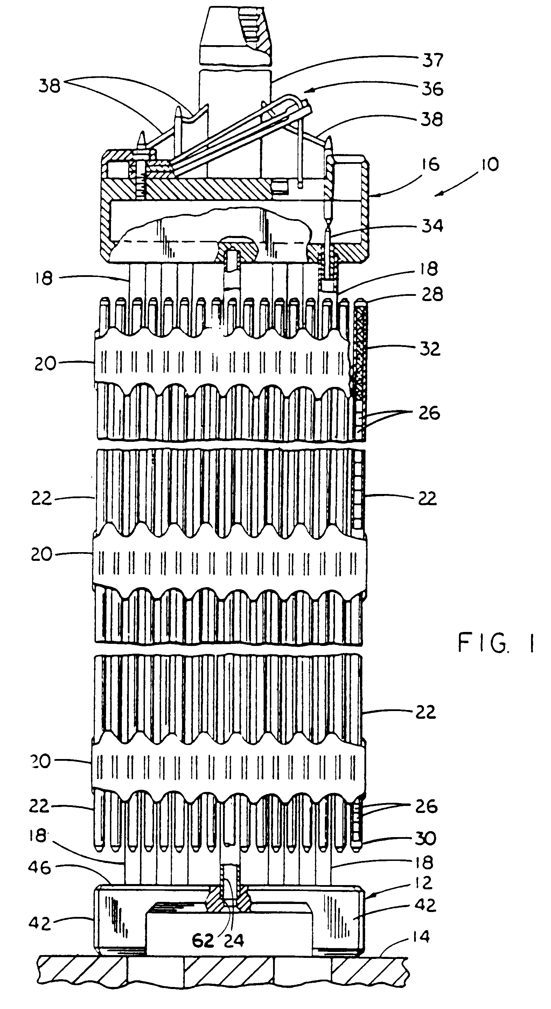

Referring now to the drawings, and particularly to Fig. 1, the fuel assembly illustrated therein and generally designated with reference numeral 10 is the type used in a pressurized water reactor and having a structural skeleton comprising a bottom nozzle 12 adapted to support the fuel assembly 10 on a lower core support plate 14 in the core region of a reactor (not shown), a top nozzle 16, and control-rod guide tubes or thimbles 18 which extend longitudinally between the bottom and top nozzles 12, 16 and have their opposite ends rigidly attached thereto.

The fuel assembly 10 further includes a plurality of transverse grids 20 axially spaced along and attached to the guide thimbles 18, an organized array of elongate fuel rods 22 transversely spaced apart and supported by the grids 20, and an instrumentation tube 24 located in the center of the fuel assembly and extending between, and attached to, the bottom and top nozzles 12, 16. With such an arrangement of parts, the fuel assembly 10 forms an integral unit capable of being conveniently handled without damaging the assembly parts.

Each of the fuel rods 22 is closed at its opposite ends by means of upper and lower end plugs 28, 30 and contains nuclear fuel pellets 26 maintained in a stack by a plenum spring 32 disposed between the upper end plug 28 and the uppermost pellet of the stack. The fuel pellets 26 composed of fissile material are responsible for creating the reactive power in the reactor. A liquid moderator/coolant, such as water or water containing boron, is pumped upwardly through flow openings in the lower core plate 14 and into the bottom nozzle 12 of the fuel assembly 10 which directs the coolant upward through the guide thimbles 18 and through the spaces between and along the fuel rods 22 in order to extract therefrom heat for the production of useful work.

The fission process is controlled by means of control rods 34 reciprocally movable in guide thimbles 18 at predetermined locations in the fuel assembly 10. A rod cluster control mechanism 36 positioned above the top nozzle 16 supports the control rods 34, the control mechanism having an internally threaded cylindrical member 37 with flukes or arms 38 radially extending therefrom, and each arm 38 being connected to a control rod 34. The control mechanism 36 is operable to move the control rods vertically in the guide thimbles 18 so as to control the fission process in the fuel assembly 10, all in a wellknown manner.

### Debris-Resistant Bottom Nozzle

In order to protect the fuel assembly from damage due to debris trapped at or below the lowermost one of the grids 20, the invention provides for such debris to be prevented from passing through the flow holes of the bottom nozzle of the fuel assembly.

Thus, in accordance with the invention, the bottom nozzle 12 for supporting the fuel assembly 10 on the lower core support plate 14 also contains features which function to filter debris of potentially damage-inducing size from the coolant flowing through the bottom nozzle 12 which, in addition to support means in the form of corner legs 42 for supporting the fuel assembly 10 on the lower core plate 14, has a generally rectangular, planar, flat top plate 46 suitably affixed, such as by welding, to the corner legs 42.

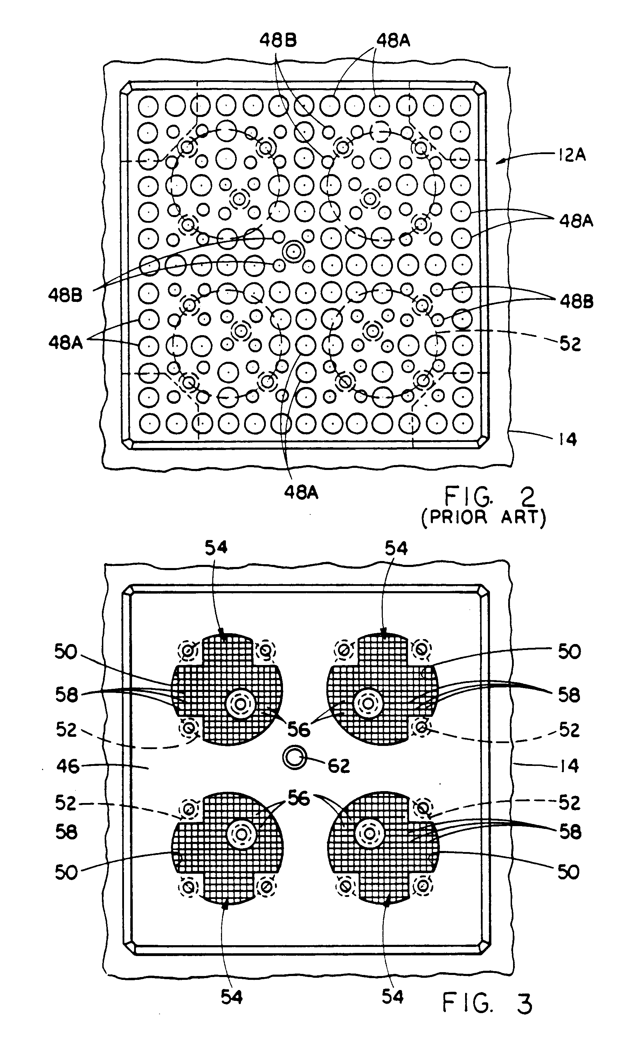

As seen from Fig. 2 showing a conventional bottom nozzle 12A, the top plate 46A of the latter is provided with a large number of relatively large flow holes 48A, 48B of two different diametric sizes (for example, 6 mm and 12 mm). Flow holes of these sizes are large enough to pass the kind of damage-inducing size debris typically carried in liquid-coolant flow.

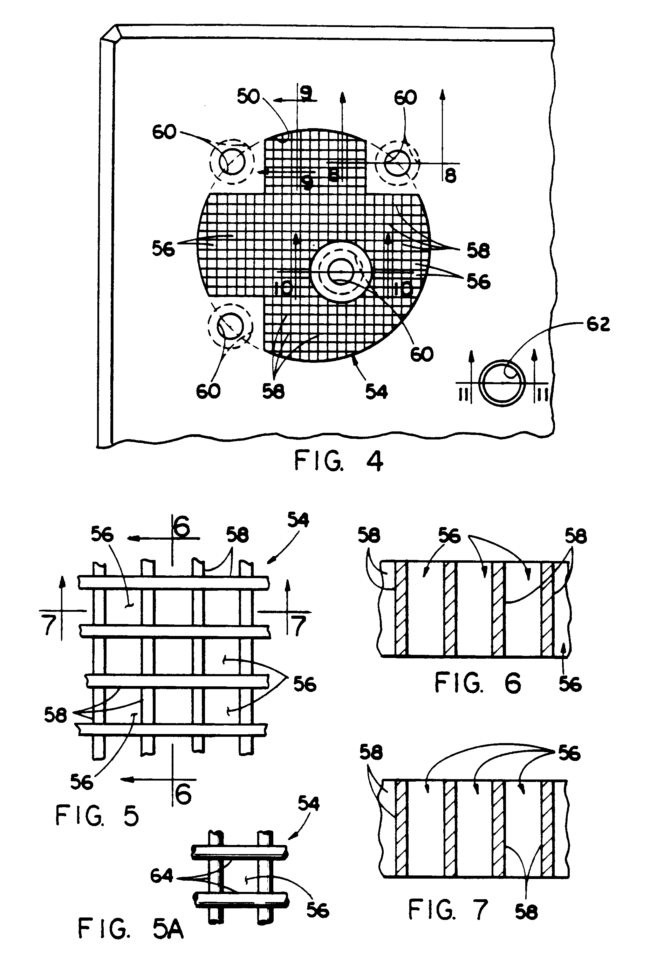

Turning now to Figs. 3 and 4 which are partial views of the debris-resistant bottom nozzle 12 embodying the invention, it can be seen therefrom that the top plate 46 of this bottom nozzle 12 is of substantially solid configuration and closed to the flow of liquid coolant therethrough, except for a plurality of spaced cut-out regions 50 formed therethrough at locations such as to be in alignment with and directly above the respective coolant flow inlet holes 52 through the lower core plate 14 when the fuel assembly is supported thereon. Each of the cut-out regions 50 is approximately of the same size as each of the inlet holes 52 in the lower core plate 14.

The debris-resistant bottom nozzle 12 also includes a plurality of separate, open criss-cross structures 54 each of which is secured, e.g. welded, to the plate 46 and extends within its plane across one of the cut-out regions 50 therein. The criss-cross structures 54 define individual openings 56 therethrough which may but need not necessarily be square in cross-section, and which openings 56 are of a cross-sectional size small enough to filter out debris of damage-inducing size which otherwise would tend to collect in free or unoccupied spaces of the lowermost grid 20 of the fuel assembly 10, but large enough to pass debris of nondamage-inducing size allowing it to pass freely also through the unoccupied spaces of the lowermost grid 20. Therefore, any debris carried by the liquid coolant flow and small enough to pass through the criss-cross structure openings 56 will also pass through the unoccupied grid spaces, whereas any debris carried by the liquid coolant too large to pass freely through the unoccupied grid spaces will not pass through the openings 56 of the criss-cross structures 54.

Observations have shown that debris less than 4.8 mm in width is unlikely to cause fuel-rod damage at or below the lowermost grid of a typical fuel assembly. Thus, structures 54 with openings 56 measuring less than 4.8 mm at their longest dimension should substantially reduce the percentage of potentially rod-damaging debris carried into the fuel assembly 10 by the primary coolant flow.

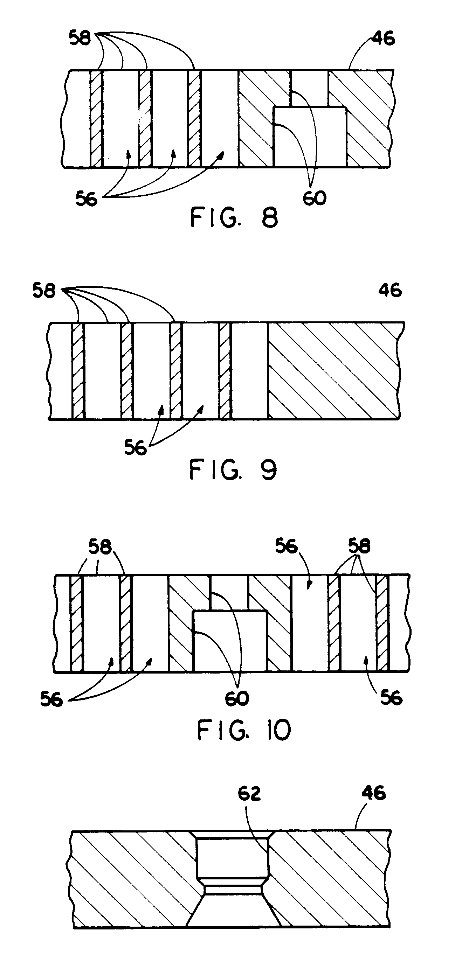

In the preferred embodiment shown in Figs. 3-10, the criss-cross structure 54 is composed of a plurality of spaced and interleaved straps 58 forming an open grid structure. In their height dimensions, the horizontal straps 58 extend in vertical planes generally parallel to the direction of coolant flow through the open grid structure. The openings 56 defined by the interleaved straps 58 are in the form of open vertical channels which allow passage of coolant flow with very slight pressure drop. The straps 58 also serve to intercept and detain any fuel rods 22 which may happen to overcome the holding forces applied by the springs and dimples (not shown) of the grids 20 and, consequently, may drop down upon the nozzle plate 46.

As also seen from Figs. 3, 4, 8, 10 and 12, each criss-cross structure 54 of the debris-resistant bottom nozzle 12 includes several double bore-defining structures 60 within the cut-out regions 50 for supporting the lower ends of the ones of the guide thimbles 18 which overlie the cut-out regions 50. The double bore-defining structures 60 are fixed to the plate 46 and to the structure 54 both at the intersection of the structure 54 and the plate 46 and within the structure 54 itself. The structure 60 fixed totally within the criss-cross structure 54 is in the form of a sleeve, a shown in Figs. 3, 4 and 10. The plate 46 also has a hole 62 formed therethrough in the center thereof (see Figs. 1, 3, 4, 11 and 12) in which the lower end of the instrumentation tube 24 is adapted to be anchored.

In the alternative embodiment shown in Fig. 5A, the criss-cross structure 54 takes the form of a plurality of interconnected, crossed and spaced wires 64 forming an open mesh structure. The openings 56 defined between the wires 64 are square in cross-section. Such wires 64 might be used in bottom-nozzle configurations wherein the cut-out regions 50 are not aligned with guide thimbles so that no structure for supporting the lower ends of guide thimbles is needed.

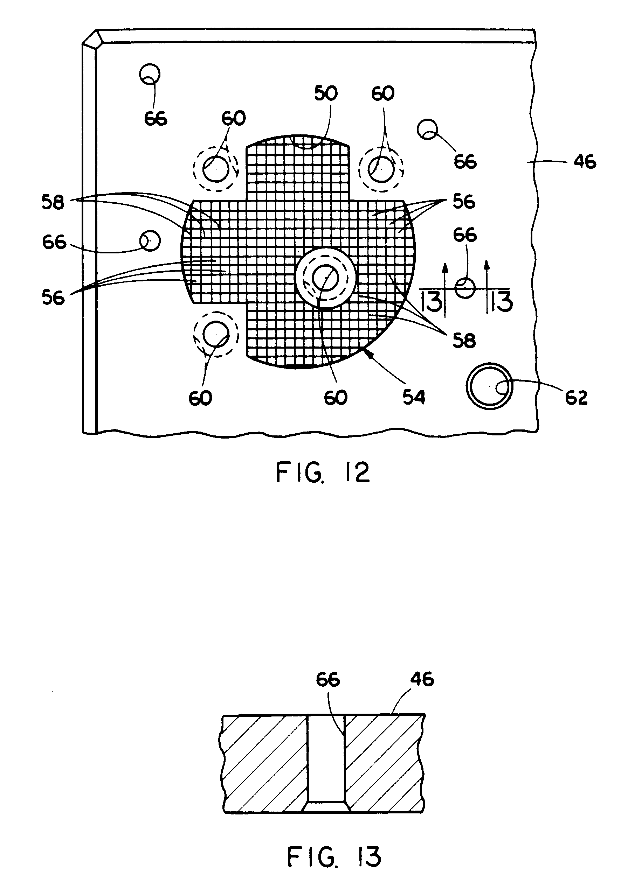

Finally, should the pressure drop of the debris-resistant bottom nozzle 12 increase more than desired upon employment of the substantially solid top plate 46 with the cut-out regions 50 and criss-cross structures 54 therein, one or more pressure-drop reducing flow holes 66 can be drilled through the plate 46 at locations spaced from the cut-out regions 50, as shown in Figs. 12 and 13.

## Claims

1. A debris-resistant bottom nozzle (12) in or for a nuclear fuel assembly (10) including fuel-rod support grids (20), said bottom nozzle comprising support means (42) for supporting the bottom nozzle on a lower core plate (14) of a nuclear reactor which core plate has coolant inlet holes (52) formed therein, and a plate (46) connected to the support means and extending across said core plate (14) thereabove when the bottom nozzle is supported on the core plate, characterized in that said plate (46) is of substantially solid configuration with mutually spaced cut-out regions (50) formed therein at locations which are in direct alignment with respective ones of said coolant inlet holes (52) when the bottom nozzle is supported on the core plate (14), and each of said cut-out regions (50) has associated therewith a separate open criss-cross structure (54) which extends across the associated cut-out region (50) and is affixed to said plate (46), each criss-cross structure (54) defining a plurality of individual openings (56) each of which is sufficiently small in cross-section to filter out coolant-borne debris too large to pass freely through unoccupied spaces of a lowermost one of said support grids (20) supporting the fuel rods, and is sufficiently large in cross-section to pass debris of nondamage-inducing size and able to pass freely also through said unoccupied spaces of the lowermost support grid.

2. A debris-resistant bottom nozzle according to claim 1, characterized in that each of said cut-out regions (50) has substantially the same size as the associated inlet hole (52) of the lower core plate (14).

3. A debris-resistant bottom nozzle according to claim 1 or 2, characterized in that at least one of said cut-out regions (50) has associated therewith a guidethimble lower-end supporting structure (60) which extends into said one cut-out region (50) and is affixed to the criss-cross structure (54) associated therewith and to said plate (46).

4. A debris-resistant bottom nozzle according to claim 1 or 2, characterized in that at least one of said cut-out regions (50) has associated therewith a guidethimble lower-end supporting structure (60) which is disposed within said one cut-out region (50) and is affixed to the criss-cross structure (54) associated therewith.

5. A debris-resistant bottom nozzle according to claim 1, 2, 3 or 4, characterized in that each said criss-cross structure (54) is in the form of a plurality of interleaved straps (58) forming an open grid.

6. A debris-resistant bottom nozzle according to claim 1, 2, 3 or 4, characterized in that each said criss-cross structure (54) is in the form of a plurality of interconnected crossed wires (64) forming an open mesh structure.

7. A debris-resistant bottom nozzle according to any one of the preceding claims, characterized in that said plate (46) has at last one pressure-drop reducing flow hole (66) formed therein at a location spaced from said cut-out regions (50).

8. A debris-resistant bottom nozzle according to any one of the preceding claims, characterized in that each said criss-cross structure (54) extends across the associated cut-out region (50) within the plane of said plate (46).

## Patentansprüche

1. Teilchen-resistentes Fußstück (12) in einem oder für ein Kernbrennelement (10), das Brennstabhaltegitter (20) aufweist, wobei das Fußstück Stützmittel (42) zum Abstützen des Fußstücks auf einer unteren Kerntragplatte (14) eines Kernreaktors, in welcher Kühlmitteleinlaßöffnungen (52) gebildet sind, und eine mit den Stützmitteln verbundene und sich bei auf der Kerntragplatte abgestütztem Fußstück oberhalb der Kerntragplatte (14) über diese erstreckende Platte (46) aufweist, dadurch gekennzeichnet, daß die genannte Platte (46) im wesentlichen massiv ausgebildet und mit darin an Stellen, die bei auf der Kerntragplatte (14) abgestütztem Fußstück direkt mit jeweils einer der genannten Kühlmitteleinlaßöffnungen (52) fluchten, gebildeten, mit gegenseitigen Abständen angeordneten Ausschnitten (50) versehen ist, und daß jedem Ausschnitt (50) eingesondertes offenes Kreuzgitter (54) zugeordnet ist, das über den zugeordneten Ausschnitt (50) verläuft und an der genannten Platte (46) befestigt ist, wobei jedes Kreuzgitter (54) eine Vielzahl von Einzelöffnungen (56) bildet, die jeweils ausreichend kleinen Querschnitt haben, um im Kühlmittel mitgeschwemmte Teilchen auszufiltern, die zu groß sind, um frei durch offene Zwischenäume des untersten Brennstabhaltegitters (20) hindurchpassieren zu können, die aber ausreichend großen Querschnitt haben, um Teilchen unschädlicher Größe, die frei durch die offenen Zwischenräume des untersten Brennstabhaltegitters passieren können, hindurchtreten zu lassen.

2. Teilchen-resistentes Fußstück nach Anspruch 1, dadurch gekennzeichnet, daß jeder der Ausschnitte (50) im wesentlichen gleiche Größe wie die zugeordnete Einlaßöffnung (52) der unteren Kerntragplatte (14) hat.

3. Teilchen-resistentes Fußstück nach Anspruch 1 oder 2, dadurch gekennzeichnet, daß mindestens einer der Ausschnitte (50) mit einer Halterung (60) für das untere Ende eines Führungsrohrs versehen ist, die in den genannten Ausschnitt (50) hineinragt und an dem zugeordneten Kreuzgitter (54) und der genannten Platte (46) befestigt ist.

4. Teilchen-resistentes Fußstück nach Anspruch 1 oder 2, dadurch gekennzeichnet, daß mindestens einer der Ausschnitte (50) mit einer Halterung (60) für das untere Ende eines Führungsrohrs versehen ist, das in dem genannten einen Ausschnitt (50) angeordnet und an dem zugehörigen Kreuzgitter (54) befestigt ist.

5. Teilchen-resistentes Fußstück nach Anspruch 1, 2, 3 oder 4, dadurch gekennzeichnet, daß jedes Kreuzgitter (54) in Form einer Vielzahl ineinandergreifender, ein offenes Gitter bildender Streifen (58) ausgebildet ist.

6. Teilchen-resistentes Fußstück nach Anspruch 1, 2, 3 oder 4, dadurch gekennzeichnet, daß jedes Kreuzgitter (54) in Form einer Vielzahl miteinander verbunder, sich kreuzender Drähte (64) ausgebildet ist, die ein offenes Maschennetz bilden.

7. Teilchen-resistentes Fußstück nach einem der vorhergehenden Ansprüche, dadurch gekennzeichnet, daß die Platte (46) mindestens eine druckabfallreduzierende Strömungsöffnung (66) aufweist, die darin an einer von den Ausschnitten (50) mit Abstand befindlichen Stelle gebildet ist.

8. Teilchen-resistentes Fußstück nach einem der vorhergehenden Ansprüche, dadurch gekennzeichnet, daß jedes Kreuzgitter (54) innerhalb der Ebene der genannten Platte (46) über den zugehörigen Ausschnitt (50) verläuft.

## Revendications

1. Embout inférieur (12) résistant aux débris dans ou pour un assemblage (10) de combustible nucléaire comprenant des grilles de support (20) de barreaux de combustible, ledit embout inférieur comportant un moyen de support (42) de cet embout inférieur sur une plaque inférieure (14) du coeur d'un réacteur nucléaire, cette plaque du coeur possédant des trous (52) d'amenée du réfrigérant pratiqués dans celle-ci, et une plaque (46) reliée au moyen de support et transversale à ladite plaque (14) du coeur au-dessus de celle-ci lorsque l'embout inférieur est supporté par la plaque du coeur, caractérisé en ce que ladite plaque (46) a une configuration essentiellement massive avec des régions (50) découpées et espacées les unes des autres formées dans cette plaque en des emplacements alignés directement avec les trous respectifs (52) d'amenée du réfrigérant lorsque l'embout inférieur est supporté par la plaque (14) du coeur, et chacune desdites régions découpées (50) étant associée à une structure (54) en réseau, ouverte et séparée, qui est transversale à la région découpée associée (50) et qui est fixée à ladite plaque (46), chaque structure en réseau (54) définissant plusieurs ouvertures individuelles (56) ayant chacune une section transversale suffisamment petite pour filtrer les débris issus du réfrigérant, trop importants pour pouvoir traverser librement les espaces inoccupés de la grille de support (20) la plus basse parmi les grilles de support des barreaux de combustible, et ayant une section transversale suffisamment grande pour laisser passer les débris dont la taille n'est pas critique et qui peuvent également passer librement à travers les espaces inoccupés de la grille de support la plus basse.

2. Embout inférieur résistant aux débris selon la revendication 1, caractérisé en ce que chacune desdites régions découpées (50) a pratiquement les mêmes dimensions que le trou d'amenée associé (52) de la plaque inférieure (14) du coeur.

3. Embout inférieur résistant aux débris selon la revendication 1 ou 2, caractérisé en ce qu'au moins l'une des régions découpées (50) est associée à une structure (60) supportant l'extrémité inférieure d'une chaussette de guidage placée dans ladite région découpée (50) et qui est fixée à la structure en réseau (54) associée à celle-ci et à ladite plaque (46).

4. Embout inférieur résistant aux débris selon la revendication 1 ou 2, caractérisé en ce qu'au moins l'une desdites régions découpées (50) est associée à une structure (60) de support de l'extrémité inférieure d'une chaussette de guidage qui est placée dans ladite région découpée (50) et qui est fixée à la structure en réseau (54) associée à celle-ci.

5. Embout inférieur résistant aux débris selon la revendication 1,2,3 ou 4, caractérisé en ce que chacune desdites structures en réseau (54) se présente sous la forme de plusieurs bandes entrecroisées (58) formant une grille ouverte.

6. Embout inférieur résistant aux débris selon la revendication 1,2,3 ou 4, caractérisé en ce chacune desdites structures en réseau (54) se présente sous la forme de plusieurs fils (64) croisés interconnectés formant une structure maillée ouverte.

7. Embout inférieur résistant aux débris selon l'une quelconque des revendications précédentes, caractérisé en ce que chacune desdites plaques (46) possède au moins un orifice d'écoulement (66) pour réduire la chute de pression, formé dans celles-ci en un emplacement éloigné desdites régions découpées (50).

8. Embout résistant aux débris selon l'une quelconque des revendications précédentes, caractérisé en ce que chacune desdites structures en réseau (54) est transversale à la région (50) découpée associée dans le plan de ladite plaque (46).
